(19) Europäisches Patentamt
European Patent Office
Office européen des brevets

(11) **EP 2 407 759 A1**

(12) **EUROPÄISCHE PATENTANMELDUNG**

(43) Veröffentlichungstag:
**18.01.2012 Patentblatt 2012/03**

(51) Int Cl.:
***G01H 1/00*** *(2006.01)*

(21) Anmeldenummer: **11173919.9**

(22) Anmeldetag: **14.07.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **16.07.2010 DE 102010031455**

(71) Anmelder: **DEERE & COMPANY**
**Moline, Illinois 61265-8098 (US)**

(72) Erfinder: **von Holst Dr., Christian**
**67310 Hettenleidelheim (DE)**

(74) Vertreter: **Dehnhardt, Florian Christopher**
**Deere & Company**
**European Office**
**Global Intellectual Property Services**
**John-Deere-Straße 70**
**68163 Mannheim (DE)**

(54) **Einrichtung zur Ermittlung einer Schwingungsdosis**

(57)     Einrichtung (10) zur Ermittlung einer Schwingungsdosis, mit einer beweglich gelagerten Fahrzeugkomponente (12), einer Sensoreinrichtung (16) zur Erfassung einer eine Bewegung der Fahrzeugkomponente (12) wiedergebenden Bewegungsgröße, und einer Auswerteeinheit (26), die auf Grundlage der erfassten Bewegungsgröße eine die Schwingungsdosis wiedergebende Dosisgröße berechnet. Die Auswerteeinheit (26) überträgt die berechnete Dosisgröße an eine Speichereinheit (32), wobei die Dosisgröße in Form eines zugehörigen Dosiseintrags in der Speichereinheit (32) abgelegt wird.

Fig. 1

EP 2 407 759 A1

**Beschreibung**

Die Erfindung betrifft eine Einrichtung zur Ermittlung einer Schwingungsdosis, mit einer beweglich gelagerten Fahrzeugkomponente, einer Sensoreinrichtung zur Erfassung einer eine Bewegung der Fahrzeugkomponente wiedergebenden Bewegungsgröße, und einer Auswerteeinheit, die auf Grundlage der erfassten Bewegungsgröße eine die Schwingungsdosis wiedergebende Dosisgröße berechnet.

Gerade Fahrer landwirtschaftlicher Nutzfahrzeuge sind während der Durchführung von Feld- und Transportarbeiten erheblichen Schwingungsbelastungen ausgesetzt, die in Form von Ganzkörperschwingungen über den - meist beweglich gelagerten - Fahrersitz übertragen werden. Hierbei kann eine beruflich bedingte längerfristige Schwingungsexposition die Sicherheit und Gesundheit des Fahrers gefährden und ursächlich zum Auftreten unerwünschter Rückenbeschwerden führen.

Die Europäische Richtlinie 2002/44/EC legt insofern verbindliche Mindeststandards für die zulässige Schwingungsdosis für als Arbeitnehmer tätige, beispielsweise bei einem Lohnunternehmen beschäftigte Fahrer landwirtschaftlicher Nutzfahrzeuge fest. In diesem Zusammenhang sei insbesondere auf die Veröffentlichung der International Organization for Standardization "ISO 2631-1, Mechanical vibration and schock - Evaluation of human exposure to whole-body vibration, Part 1: General requirements, Second edition 1997-05-01" hingewiesen, aus der unter anderem eine geeignete Vorgehensweise zur Ermittlung der Schwingungsexposition und damit der Schwingungsdosis hervorgeht.

Es ist daher Aufgabe der vorliegenden Erfindung, eine Einrichtung der eingangs genannten Art derart weiterzubilden, dass die aktuelle Schwingungsdosis sowie deren richtlinienkonforme Einhaltung jederzeit vom Fahrer selbst oder aber durch dessen Arbeitgeber kontrolliert werden kann.

Diese Aufgabe wird durch eine Einrichtung zur Ermittlung einer Schwingungsdosis mit den Merkmalen des Patentanspruchs 1 gelöst.

Die Einrichtung zur Ermittlung einer Schwingungsdosis umfasst eine beweglich gelagerte Fahrzeugkomponente, eine Sensoreinrichtung zur Erfassung einer eine Bewegung der Fahrzeugkomponente wiedergebenden Bewegungsgröße, und eine Auswerteeinheit, die auf Grundlage der erfassten Bewegungsgröße eine die Schwingungsdosis wiedergebende Dosisgröße berechnet. Erfindungsgemäß überträgt die Auswerteeinheit die berechnete Dosisgröße an eine Speichereinheit, wobei die Dosisgröße in Form eines zugehörigen Dosiseintrags in der Speichereinheit abgelegt wird.

Da die Schwingungsdosis mit der Dauer und Intensität der Schwingungsexposition zunimmt, wird der in der Speichereinheit abgelegte Dosiseintrag von der Auswerteeinheit in regelmäßigen zeitlichen Abständen durch Neuberechnung der Dosisgröße aktualisiert. Die aktuelle Schwingungsdosis sowie deren richtlinienkonforme Einhaltung kann jederzeit durch Auslesen der Speichereinheit vom Fahrer selbst oder aber durch dessen Arbeitgeber kontrolliert werden.

Bei der beweglich gelagerten Fahrzeugkomponente handelt es sich typischerweise um einen gegenüber einem starren Fahrzeugrahmen mittels zugehöriger Federelemente schwingungsgedämpft angebrachten Fahrersitz. Zusätzlich oder alternativ ist es jedoch auch denkbar, mittels der Sensoreinrichtung eine an einer stoßgedämpft aufgehängten Fahrerkabine auftretende Bewegung zu erfassen.

Vorteilhafte Weiterbildungen der erfindungsgemäßen Einrichtung gehen aus den Unteransprüchen hervor.

Vorzugsweise umfasst der Dosiseintrag eine auf eine vorgegebene Tagesarbeitszeit normierte Tagesschwingungsdosis und/oder einen der Tagesschwingungsdosis zugeordneten Zeitstempel. Wird eine bestimmte zulässige Tagesschwingungsdosis überschritten, so sind geeignete Maßnahmen zur Reduzierung der Schwingungsexposition des Fahrers zu ergreifen, beispielsweise indem diesem Arbeiten geringerer Schwingungsbelastung zugeteilt werden. Wird eine weitere, demgegenüber höhere Tagesschwingungsdosis überschritten, so ist eine Fortführung der Arbeiten zumindest bis zum nächsten Tag auszusetzen. Der Zeitstempel kann insbesondere eine Datumsangabe enthalten, die eine Beurteilung des zeitlichen Verlaufs der Schwingungsexposition auch über einen längeren Zeitraum ermöglicht. Die Dosiseinträge können anschließend aus der Speichereinheit ausgelesen und zum Zwecke der Bewertung in ein Tabellenkalkulationsprogramm übertragen werden. Auf diese Weise können zeitverzögert auftretende gesundheitliche Beschwerden von ärztlicher Seite leichter nachvollzogen und gegebenenfalls auf eine zeitlich zurückliegende unzulässige Schwingungsexposition zurückgeführt werden.

Ferner besteht die Möglichkeit, dass die Speichereinheit über eine reversible Schnittstelle zur Herstellung einer lösbaren Datenaustauschverbindung mit der Auswerteeinheit kommuniziert.

Die reversible Schnittstelle ist im einfachsten Fall als elektrische Steckverbindung ausgebildet. Diese erlaubt es, die Speichereinheit aus der erfindungsgemäßen Einrichtung zu entnehmen und gegen eine andere Speichereinheit auszutauschen. Mit anderen Worten ist es möglich, jedem Fahrer eine eigene Speichereinheit zur Aufzeichnung und Überwachung seiner individuellen Schwingungsdosis zuzuordnen.

Zusätzlich oder alternativ kann die reversible Schnittstelle auch als drahtlose Datenübertragungstrecke ausgebildet sein, beispielsweise als Bluetooth- oder Infrarotschnittstelle. Die Speichereinheit kann in diesem Fall in einem vom Fahrer mitführbaren mobilen Endgerät, insbesondere einem Mobiltelefon, einem Handheld-Computer, einem Laptop oder dergleichen untergebracht sein. Der Aufbau der Datenaustauschverbindung erfolgt entweder selbsttätig, sobald sich das mobile Endgerät im Empfangsbereich der drahtlosen Datenübertragungstrecke befindet, oder aber durch Initialisierung von Seiten des Fahrers.

Bei der Speichereinheit kann es sich um einen langlebigen und robusten Halbleiterspeicher handeln, beispielsweise um eine wiederbeschreibbare Speicherkarte in Gestalt eines Flash-Speichers. Derartige Flash-Speicher sind unter anderem als Multimedia Card (MMC), Secure Digital Memory Card (SD) oder Memory Stick (MS) bekannt, wobei letzterer über einen Universal Serial Bus (USB) mit der Auswerteeinheit verbindbar sein kann.

Um die Speicherkarte einem bestimmten Fahrer zuordnen zu können, kann diese mit einem geeigneten Identifikationsmerkmal ausgestattet sein. Bei dem Identifikationsmerkmal handelt es sich insbesondere um einen vor Fahrtantritt über ein Bedien- bzw. Tastenfeld einzugebenden PIN-Code.

Ferner ist es möglich, dass die Auswerteeinheit mit einer Anzeigeeinrichtung zur Visualisierung der berechneten Dosisgröße in Verbindung steht. Die Visualisierung kann mittels einer fahrzeugfesten Anzeigeeinrichtung oder aber durch drahtlose Übertragung über die reversible Schnittstelle an das mit einer entsprechenden Anzeigeeinrichtung ausgestattete mobile Endgerät erfolgen. Bei der Anzeigeeinrichtung handelt es sich vorzugsweise um eine grafikfähige Displayeinheit, die es erlaubt, neben einer numerischen Anzeige der Schwingungsdosis deren Kritikalität grafisch in Form entsprechender Diagrammdarstellungen wiederzugeben. Auf diese Weise ist gewährleistet, dass der Fahrer während der Arbeit stets den Überblick über die aktuelle Schwingungsdosis behält. Zusätzlich oder alternativ ist auch eine drahtlose Übertragung der zu visualisierenden Dosisgröße über ein GSM-oder UMTS-Netzwerk an eine zentrale Leitstelle vorstellbar.

Um den Fahrer auf das Erreichen einer kritischen Schwingungsdosis hinzuweisen, besteht die Möglichkeit, dass die Auswerteeinheit durch Ansteuerung einer Informationseinrichtung die Ausgabe eines akustischen und/oder optischen Warnsignals veranlasst, wenn die berechnete Dosisgröße größer ist als ein für die einzuhaltende Tagesexposition vorgegebener Schwellenwert. Die Ausgabe optischer Warnsignale kann beispielsweise in Form leicht verständlicher piktogrammartiger und/oder verschiedenfarbiger grafischer Warndarstellungen erfolgen, vorzugsweise mittels der mit der Auswerteeinheit in Verbindung stehenden fahrzeugfesten bzw. der dem mobilen Endgerät zugeordneten Anzeigeeinrichtung und/oder eines separaten optischen Signalgebers, beispielswiese einer LED- oder OLED-Anzeige.

Zusätzlich oder alternativ kann ein fahrzeugfester oder dem mobilen Endgerät zugeordneter Signalgeber zur Ausgabe akustischer Warnsignale vorgesehen sein.

Bei der Bewegungsgröße handelt es sich insbesondere um eine mittels der Sensoreinrichtung erfasste Beschleunigungsgröße, wobei die Beschleunigungsgröße eine an der beweglich gelagerten Fahrzeugkomponente in zumindest einer Bewegungsrichtung auftretende Beschleunigung wiedergibt. Vorzugsweise umfasst die Sensoreinrichtung mehrere Beschleunigungsgeber, die in einer x-, y- und z-Richtung der Fahrzeugkomponente auftretende Beschleunigungsanteile erfassen. Die solchermaßen erfasste Bewegungsgröße wird anschließend über einen im Fahrzeug befindlichen CAN-Datenbus oder einen vergleichbaren Datenbus an die Auswerteeinheit übertragen.

Das Eigenfrequenzspektrum sowie die Richtung der an der beweglich gelagerten Fahrzeugkomponente auftretenden Beschleunigungsanteile hat erheblichen Einfluss auf die Gesundheit, das Komfortempfinden sowie auf das Ermüdungsverhalten des Fahrers. Insofern ist es von Vorteil, wenn die Auswerteeinheit zur Berechnung der Dosisgröße eine Filterung des Eigenfrequenzspektrums der erfassten Bewegungsgröße im Sinne einer Gewichtung physiologisch relevanter Frequenzbereiche durchführt.

Die erfindungsgemäße Kupplungsvorrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1    ein erstes Ausführungsbeispiel der erfindungsgemäßen Einrichtung zur Ermittlung einer Schwingungsdosis,

Fig. 2    ein Diagramm, das einen beispielhaften Verlauf richtungsabhängiger Gewichtungsfunktionen $W_i$ zur Ermittlung der Schwingungsdosis wiedergibt, und

Fig. 3    ein zweites Ausführungsbeispiel der erfindungsgemäßen Einrichtung zur Ermittlung einer Schwingungsdosis.

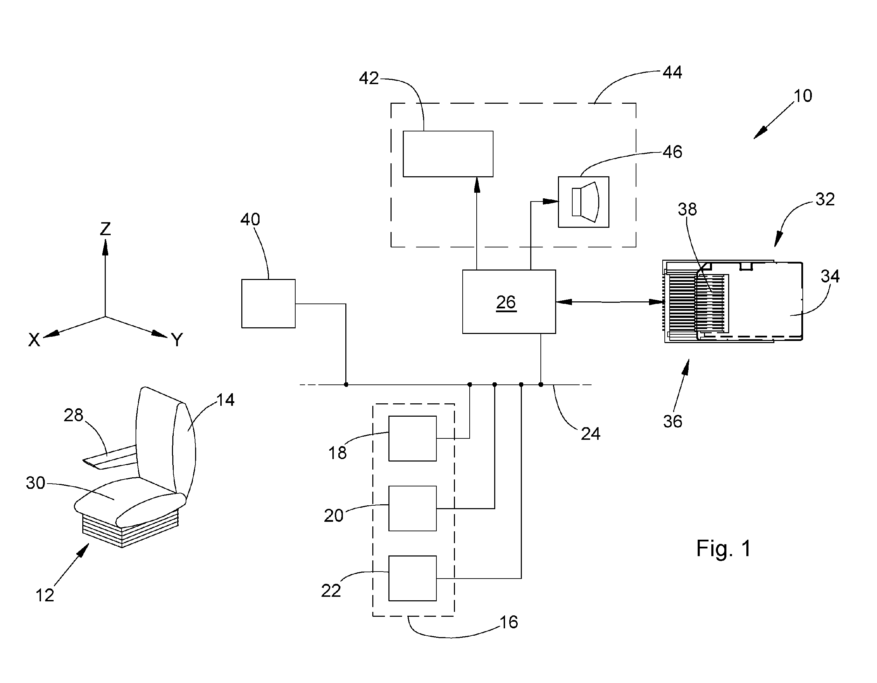

Fig. 1 zeigt ein erstes Ausführungsbeispiel der erfindungsgemä-βen Einrichtung zur Ermittlung einer Schwingungsdosis.

Die Einrichtung 10 umfasst eine in einem landwirtschaftlichen Nutzfahrzeug beweglich gelagerte Fahrzeugkomponente 12 in Gestalt eines Fahrersitzes 14. Der Fahrersitz 14 ist mittels zugehöriger Federelemente gegenüber einem starren Fahrzeugrahmen schwingungsgedämpft angebracht. Eine Sensoreinrichtung 16 dient der Erfassung einer eine Bewegung des Fahrersitzes 14 wiedergebenden Bewegungsgröße.

Beispielsgemäß handelt es sich bei der Bewegungsgröße um eine mittels der Sensoreinrichtung 16 erfasste Beschleunigungsgröße, wobei die Beschleunigungsgröße eine an dem Fahrersitz 14 in zumindest einer Bewegungsrichtung auftretende Beschleunigung $\overline{a}$ wiedergibt. Genauer gesagt umfasst die Sensoreinrichtung 16 mehrere Beschleunigungsgeber 18, 20 und 22, die in einer x-, y-, und z-Richtung des Fahrersitzes 14 auftretende Beschleunigungsanteile $a_x$, $a_y$, $a_z$ erfassen. Die solchermaßen erfasste Beschleunigungsgröße wird über einen im Fahrzeug befindlichen CAN-Datenbus 24 an eine Auswerteeinheit 26 übertragen.

Die Auswerteeinheit 26 berechnet auf Grundlage der Beschleunigungsgröße eine die Schwingungsdosis wiedergebende Dosisgröße. Im Sinne kurzer Übertragungswege ist die Sensoreinrichtung 16 am Fahrersitz 14 in unmittelbarer Nähe des CAN-Datenbusses 24 angeordnet, im vorliegenden Fall im Bereich einer als Steuerkonsole ausgebildeten Armlehne 28.

Da die Schwingungsexposition des Fahrers in erster Linie über die Sitzfläche 30 des Fahrersitzes 14 erfolgt, führt die Auswerteeinheit 26 zur Berechnung der Dosisgröße zunächst eine entsprechende Transformation der mittels der Sensoreinrichtung 16 erfassten Beschleunigungsanteile $a_x$, $a_y$, $a_z$ durch. Hierzu legt die Auswerteeinheit 26 eine Übertragungsfunktion der Form $a'_i = T.a_i$ zugrunde (i = x, y, z). In der Übertragungsfunktion bezeichnet $a_i$ den im Bereich der Armlehne 28 sensorisch erfassten Beschleunigungsanteil, $a'_i$ den auf den Ort der Sitzfläche 30 transformierten Beschleunigungsanteil, und T eine für den jeweiligen Fahrersitz 14 empirisch ermittelte Transformationsmatrix. Es sei an dieser Stelle angemerkt, dass die dargestellte Anordnung der Sensoreinrichtung 16 im Bereich der Armlehne 28 lediglich beispielhaften Charakter hat. So kann die Sensoreinrichtung 16 ebenfalls auch unmittelbar der Sitzfläche 30 oder einem beliebigen anderen Teil des Fahrersitzes 14 zugeordnet sein, beispielsweise einer von diesem umfassten Rückenlehne. Welche der vorgenannten Möglichkeiten letztlich gewählt wird, hängt von den technischen Gegebenheiten im Einzelfall und nicht zuletzt von möglichen Bauraumbeschränkungen ab.

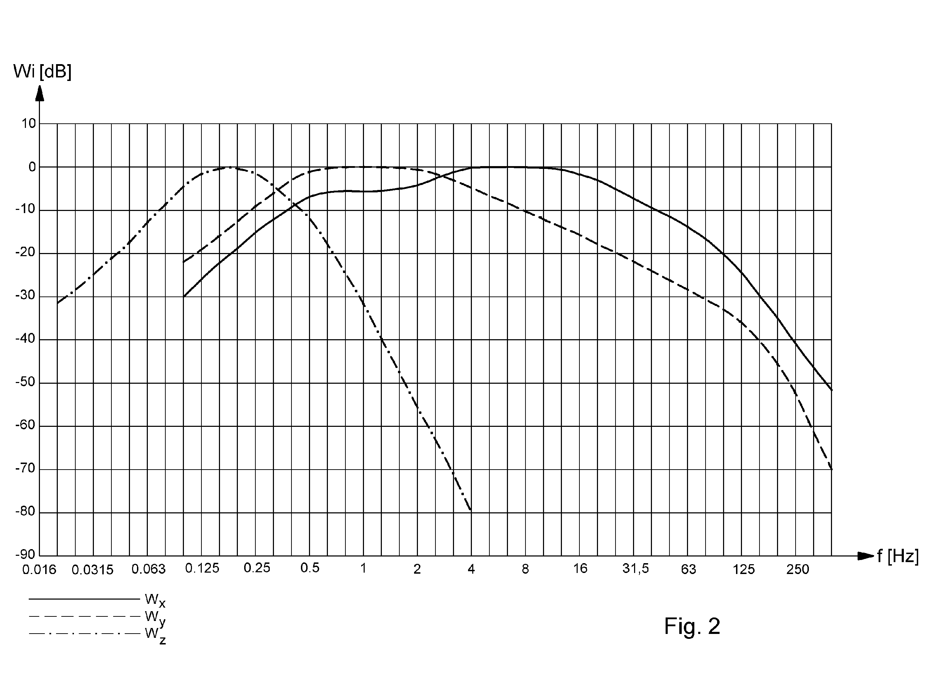

Das Eigenfrequenzspektrum sowie die Richtung der am Fahrersitz 14 auftretenden Beschleunigungsanteile $a'_i$ hat erheblichen Einfluss auf die Gesundheit, das Komfortempfinden sowie auf das Ermüdungsverhalten des Fahrers. Dementsprechend führt die Auswerteeinheit 26 eine Filterung des Eigenfrequenzspektrums der erfassten Beschleunigungsanteile $a'_i$ im Sinne einer Gewichtung physiologisch relevanter Frequenzbereiche durch. Hierzu werden die Beschleunigungsanteile $a'_i$ mit richtungsabhängigen Gewichtungsfunktionen $W_i$ multipliziert. Deren beispielhafter Verlauf ist in Fig. 2 wiedergegeben. In diesem Zusammenhang sei insbesondere auch auf den Inhalt der Veröffentlichung der International Organization for Standardization "ISO 2631-1, Mechanical vibration and schock - Evaluation of human exposure to whole-body vibration, Part 1: General requirements, Second edition 1997-05-01" hingewiesen.

Die solchermaßen von der Auswerteeinheit 26 frequenzbewerteten Beschleunigungsanteile $W_i . a'_i$ bilden die Grundlage für die Berechnung zugehöriger Effektivwerte $a_{wi}$,

$$a_{wi} = \sqrt{\frac{1}{T} \int (W_i \cdot a'_i)^2 \cdot dt} \quad,$$

sowie einer auf eine vorgegebene Tagesarbeitszeit $T_0$ normierten Tagesschwingungsdosis $A(T_0)$, deren Ermittlung im Folgenden näher erläutert werden soll. Hierbei wird für $T_0$ eine typische Tagesarbeitzeit von 8 Stunden angesetzt, also $A(T_0) = A(8)$. Da der Fahrer in diesem Zeitraum in der Regel unterschiedliche Fahrzeuge nutzt und damit mehr als nur einer Schwingungsquelle ausgesetzt ist, ist zunächst für jedes der Fahrzeuge eine separate Tagesschwingungsdosis $A_i^n(8)$ zu ermitteln,

$$A_x^n(8) = 1{,}4 \cdot a_{wx} \sqrt{\frac{T}{8}} \quad,$$

$$A_y^n(8) = 1{,}4 \cdot a_{wy} \sqrt{\frac{T}{8}} \quad,$$

$$A_z^n(8) \;=\; a_{wz}\sqrt{\frac{T}{8}} \;\;,$$

wobei T die Zeitdauer der täglichen Schwingungsexposition in Bezug auf das n-te Fahrzeug darstellt ($n \in \mathrm{IN}$). Die Tagesschwingungsdosis A(8) ergibt sich dann als Maximum der quadratischen Summe der separaten Tagesschwingungsdosen $A_i^n(8)$,

$$A_i(8) \;=\; \sqrt{\sum_n A_i^n(8)^2} \;\;,$$

also zu

$$A(8) \;=\; \max\left[A_x(8)\,,\,A_y(8)\,,\,A_z(8)\right]\;.$$

Die im vorliegenden Fall durch die Tagesschwingungsdosis A(8) wiedergegebene Dosisgröße wird anschließend von der Auswerteeinheit 26 an eine Speichereinheit 32 übertragen, wobei die Dosisgröße in Form eines zugehörigen Dosiseintrags in der Speichereinheit 32 abgelegt wird.

Da die Tagesschwingungsdosis A(8) mit der Dauer und Intensität der Schwingungsexposition zunimmt, wird der in der Speichereinheit 32 abgelegte Dosiseintrag von der Auswerteeinheit 26 in regelmäßigen zeitlichen Abständen durch Neuberechnung der Dosisgröße aktualisiert. Die aktuelle Tagesschwingungsdosis A(8) sowie deren richtlinienkonforme Einhaltung kann hierbei jederzeit durch Auslesen der Speichereinheit 32 vom Fahrer selbst oder aber durch dessen Arbeitgeber kontrolliert werden.

Der Dosiseintrag umfasst neben der Tagesschwingungsdosis A(8) einen der Tagesschwingungsdosis A(8) zugeordneten Zeitstempel. Der Zeitstempel enthält eine Datumsangabe, die eine Beurteilung des zeitlichen Verlaufs der Schwingungsexposition auch über einen längeren Zeitraum ermöglicht.

Bei der Speichereinheit 32 handelt es sich um einen Halbleiterspeicher, genauer gesagt um eine wiederbeschreibbare Speicherkarte 34 in Gestalt eines Flash-Speichers. Die Speicherkarte 34 ist beispielhaft als Secure Digital Memory Card (SD) dargestellt. Alternativ kann diese auch als Multimedia Card (MMC) oder Memory Stick (MS) ausgebildet sein, wobei letzterer über einen Universal Serial Bus (USB) mit der Auswerteeinheit 26 verbindbar ist.

Die Speicherkarte 34 kommuniziert über eine reversible Schnittstelle 36 zur Herstellung einer lösbaren Datenaustauschverbindung mit der Auswerteeinheit 26. Vorliegend ist die reversible Schnittstelle 36 als elektrische Steckverbindung 38 ausgebildet. Diese erlaubt es, die Speicherkarte 34 aus der Einrichtung 10 zu entnehmen und gegen eine andere Speicherkarte auszutauschen. Mit anderen Worten ist es möglich, jedem Fahrer eine eigene Speicherkarte zur Aufzeichnung und Überwachung seiner individuellen Schwingungsdosis zuzuordnen.

Um die Speicherkarte 34 einem bestimmten Fahrer zuordnen zu können, ist diese mit einem geeigneten Identifikationsmerkmal ausgestattet. Bei dem Identifikationsmerkmal handelt es sich um einen PIN-Code, der vor Fahrtantritt über ein mit der Auswerteeinheit 26 in Verbindung stehendes Bedienfeld 40 einzugeben ist. Das Bedienfeld 40 ist im Bereich der als Steuerkonsole ausgebildeten Armlehne 28 angeordnet und kommuniziert über den CAN-Datenbus 24 mit der Auswerteeinheit 26.

Des Weiteren steht die Auswerteeinheit 26 mit einer fahrzeugfesten Anzeigeeinrichtung 42 zur Visualisierung der berechneten Dosisgröße in Verbindung. Bei der Anzeigeeinrichtung 42 handelt es sich um eine grafikfähige Displayeinheit, die es erlaubt, neben einer numerischen Anzeige der Tagesschwingungsdosis A(8) deren Kritikalität grafisch in Form entsprechender Diagrammdarstellungen wiederzugeben.

Um den Fahrer auf das Erreichen einer kritischen Tagesschwingungsdosis A(8) hinzuweisen, veranlasst die Auswerteeinheit 26 durch Ansteuerung einer Informationseinrichtung 44 die Ausgabe eines akustischen und/oder optischen Warnsignals, wenn die berechnete Dosisgröße größer ist als ein für die Tagesschwingungsdosis A(8) vorgegebener Schwellenwert. Die Ausgabe optischer Warnsignale erfolgt beispielsweise in Form leicht verständlicher piktogrammartiger und/oder verschiedenfarbiger grafischer Warndarstellungen mittels der mit der Auswerteeinheit 26 in Verbindung stehenden Anzeigeeinrichtung 42. Zusätzlich ist ein fahrzeugfester Signalgeber 46 zur Ausgabe akustischer Warnsignale vorgesehen.

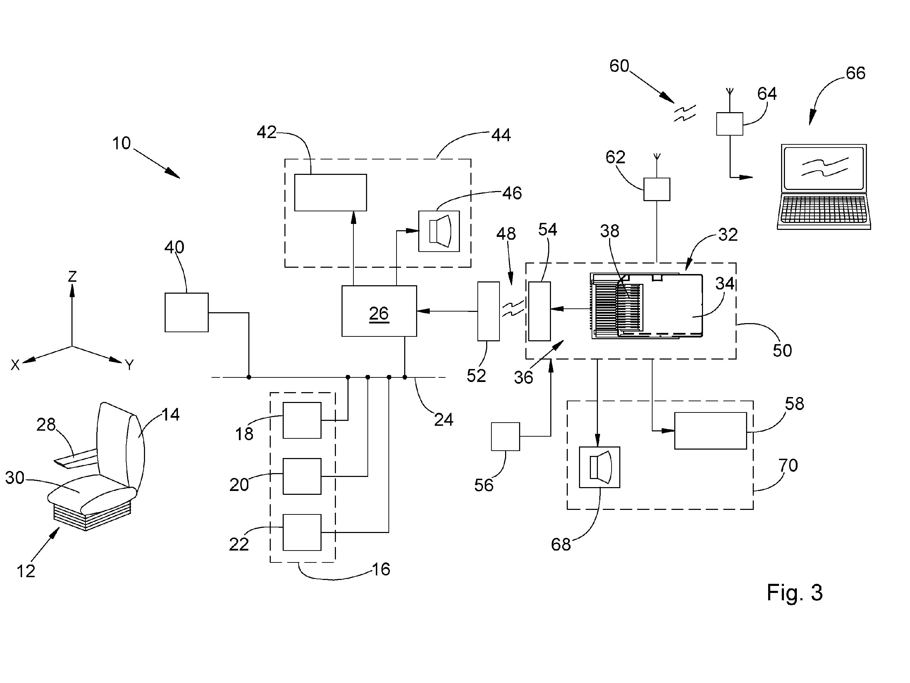

Fig. 3 zeigt ein zweites Ausführungsbeispiel der erfindungsgemäßen Einrichtung zur Ermittlung einer Schwingungsdosis.

Die dargestellte Einrichtung 10 unterscheidet sich dahingehend von dem in Zusammenhang mit Fig. 1 beschriebenen ersten Ausführungsbeispiel, dass eine weitere reversible Schnittstelle 48 vorgesehen ist. Diese ist vorliegend als drahtlose Datenübertragungstrecke ausgebildet, beispielsweise als Bluetooth- oder Infrarotschnittstelle.

Die Speicherkarte 34 ist in diesem Fall in einem vom Fahrer mitführbaren mobilen Endgerät 50, insbesondere einem Mobiltelefon, einem Handheld-Computer, einem Laptop oder dergleichen untergebracht. Das mobile Endgerät 50 steht mit der Auswerteeinheit 26 über zugehörige Transceiver 52 und 54 in Datenaustauschverbindung. Deren Aufbau erfolgt entweder selbsttätig, sobald sich das mobile Endgerät 50 im Empfangsbereich der drahtlosen Datenübertragungstrecke befindet, oder aber durch Initialisierung von Seiten des Fahrers.

Der zur Identifizierung des Fahrers vorgesehene PIN-Code kann bei Fahrtantritt wahlweise über das fahrzeugfeste Bedienfeld 40 oder ein dem mobilen Endgerät 50 zugeordnetes Tastenfeld 56 eingegeben werden.

Abweichend vom ersten Ausführungsbeispiel erfolgt die Visualisierung der berechneten Dosisgröße durch drahtlose Übertragung über die reversible Schnittstelle 48 an das mit einer entsprechenden Anzeigeeinrichtung 58 ausgestattete mobile Endgerät 50. Zusätzlich ist eine drahtlose Übertragung der zu visualisierenden Dosisgröße über ein GSM- oder UMTS-Netzwerk 60 mittels zugehöriger Transceiver 62 und 64 an eine zentrale Leitstelle 66 vorgesehen. Die dem mobilen Endgerät 50 zugeordnete Anzeigeeinrichtung 58 wird zugleich zur Ausgabe der auf ein Erreichen einer kritischen Tagesschwingungsdosis A(8) hinweisenden optischen Warnsignale verwendet. Ein dem mobilen Endgerät 50 zugeordneter Signalgeber 68 dient ferner der Ausgabe zugehöriger akustischer Warnsignale. Die Anzeigeeinrichtung 58 und der Signalgeber 68 sind gemeinsamer Bestandteil einer von dem mobilen Endgerät 50 umfassten Informationseinrichtung 70.

### Patentansprüche

1. Einrichtung zur Ermittlung einer Schwingungsdosis, mit einer beweglich gelagerten Fahrzeugkomponente (12), einer Sensoreinrichtung (16) zur Erfassung einer eine Bewegung der Fahrzeugkomponente (12) wiedergebenden Bewegungsgröße, und einer Auswerteeinheit (26), die auf Grundlage der erfassten Bewegungsgröße eine die Schwingungsdosis wiedergebende Dosisgröße berechnet, **dadurch gekennzeichnet, dass** die Auswerteeinheit (26) die berechnete Dosisgröße an eine Speichereinheit (32) überträgt, wobei die Dosisgröße in Form eines zugehörigen Dosiseintrags in der Speichereinheit (32) abgelegt wird.

2. Einrichtung nach Anspruch 1, **dadurch gekennzeichnet, dass** der Dosiseintrag eine auf eine vorgegebene Tagesarbeitszeit normierte Tagesschwingungsdosis und/oder einen der Tagesschwingungsdosis zugeordneten Zeitstempel umfasst.

3. Einrichtung nach Anspruch 1 oder 2, **dadurch gekennzeichnet, dass** die Speichereinheit (32) über eine reversible Schnittstelle (36, 48) zur Herstellung einer lösbaren Datenaustauschverbindung mit der Auswerteeinheit (26) kommuniziert.

4. Einrichtung nach einem der Ansprüche 1 bis 3, **dadurch gekennzeichnet, dass** die reversible Schnittstelle (36) als elektrische Steckverbindung (38) ausgebildet ist.

5. Einrichtung nach einem der Ansprüche 1 bis 4, **dadurch gekennzeichnet, dass** die reversible Schnittstelle (48) als drahtlose Datenübertragungstrecke ausgebildet ist.

6. Einrichtung nach einem der Ansprüche 1 bis 5, **dadurch gekennzeichnet, dass** es sich bei der Speichereinheit (32) um einen Halbleiterspeicher handelt.

7. Einrichtung nach einem der Ansprüche 1 bis 6, **dadurch gekennzeichnet, dass** die Speichereinheit (32) mit einem Identifikationsmerkmal ausgestattet ist.

8. Einrichtung nach einem der Ansprüche 1 bis 7, **dadurch gekennzeichnet, dass** die Auswerteeinheit (26) mit einer Anzeigeeinrichtung (42, 58) zur Visualisierung der berechneten Dosisgröße in Verbindung steht.

9. Einrichtung nach einem der Ansprüche 1 bis 8, **dadurch gekennzeichnet, dass** die Auswerteeinheit (26) durch Ansteuerung einer Informationseinrichtung (44, 70) die Ausgabe eines akustischen und/oder optischen Warnsignals veranlasst, wenn die berechnete Dosisgröße größer ist als ein für die einzuhaltende Tagesexposition vorgegebener Schwellenwert.

10. Einrichtung nach einem der Ansprüche 1 bis 9, **dadurch gekennzeichnet, dass** es sich bei der Bewegungsgröße um eine mittels der Sensoreinrichtung (16) erfasste Beschleunigungsgröße handelt.

11. Einrichtung nach einem der Ansprüche 1 bis 10, **dadurch gekennzeichnet, dass** die Auswerteeinheit (26) zur Berechnung der Dosisgröße eine Filterung des Eigenfrequenzspektrums der erfassten Bewegungsgröße im Sinne einer Gewichtung physiologisch relevanter Frequenzbereiche durchführt.

12. Fahrzeug, insbesondere landwirtschaftliches Nutzfahrzeug, mit einer Einrichtung (10) nach einem der Ansprüche 1 bis 11.

Fig. 1

Fig. 2

Fig. 3

Europäisches
Patentamt

European
Patent Office

Office européen
des brevets

**EUROPÄISCHER RECHERCHENBERICHT**

**Nummer der Anmeldung**

EP 11 17 3919

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 645 230 A2 (WACKER CONSTRUCTION EQUIPMENT [DE]) 12. April 2006 (2006-04-12) * Absätze [0002], [0010], [0018], [0024] - [0026], [0033], [0041], [0047], [0059] - [0061], [0074]; Abbildung 1 * ----- | 1-12 | INV. G01H1/00 |
| X | EP 1 693 655 A2 (CATERPILLAR INC [US]) 23. August 2006 (2006-08-23) * Absätze [0006], [0017], [0024], [0026], [0034], [0035], [0037], [0039]; Abbildungen 1,2a * ----- | 1-12 | |
| X | EP 1 752 747 A2 (VOLVO CONSTR EQUIP HOLDING SE [SE]) 14. Februar 2007 (2007-02-14) * Absätze [0008], [0012], [0021] - [0024]; Abbildungen 1-3 * ----- | 1-12 | |
| X | WO 2006/120550 A2 (EATON CORP [US]; SIRRINE SCOTT A [US]; MARSH KEVIN W [US]) 16. November 2006 (2006-11-16) * Absätze [0005], [0021], [0022], [0025], [0048] * ----- | 1-12 | RECHERCHIERTE SACHGEBIETE (IPC)  G01H |
| X | DE 10 2007 019366 A1 (GRAMMER AG [DE]) 30. Oktober 2008 (2008-10-30) * Absätze [0001], [0005], [0006], [0010], [0013], [0015], [0026], [0027] * ----- | 1-12 | |
| X | DE 10 2005 053264 A1 (STILL GMBH [DE]) 10. Mai 2007 (2007-05-10) * Absätze [0006], [0009], [0011], [0012], [0019], [0022], [0024] * ----- | 1-12 | |

-/--

Der vorliegende Recherchenbericht wurde für alle Patentansprüche erstellt

| Recherchenort | Abschlußdatum der Recherche | Prüfer |
|---|---|---|
| München | 17. November 2011 | Schneiderbauer, K |

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 11 17 3919

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2007 014894 A1 (BOSCH GMBH ROBERT [DE]) 2. Oktober 2008 (2008-10-02) * Absätze [0006], [0007], [0029], [0033], [0036] * ----- | 1-12 | |
| A | GB 2 438 219 A (QINETIQ LTD [GB]; QINETIQ LTD [GB]) 21. November 2007 (2007-11-21) * Seite 1, Zeile 7 - Zeile 11 * * Seite 6, Zeile 1 - Zeile 6 * ----- | 1-12 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 17. November 2011 | Schneiderbauer, K |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes
    Dokument

EPO FORM 1503 03.82 (P04C03)

# EP 2 407 759 A1

**ANHANG ZUM EUROPÄISCHEN RECHERCHENBERICHT**
**ÜBER DIE EUROPÄISCHE PATENTANMELDUNG NR.**                    EP 11 17 3919

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2011

| Im Recherchenbericht angeführtes Patentdokument | Datum der Veröffentlichung | Mitglied(er) der Patentfamilie | Datum der Veröffentlichung |
|---|---|---|---|
| EP 1645230 A2 | 12-04-2006 | DE 102004045141 A1<br>EP 1645230 A2 | 30-03-2006<br>12-04-2006 |
| EP 1693655 A2 | 23-08-2006 | EP 1693655 A2<br>US 2006185434 A1 | 23-08-2006<br>24-08-2006 |
| EP 1752747 A2 | 14-02-2007 | CN 101016746 A<br>EP 1752747 A2<br>JP 4696034 B2<br>JP 2007046447 A<br>KR 100702180 B1<br>US 2007038354 A1 | 15-08-2007<br>14-02-2007<br>08-06-2011<br>22-02-2007<br>02-04-2007<br>15-02-2007 |
| WO 2006120550 A2 | 16-11-2006 | US 2006255923 A1<br>WO 2006120550 A2 | 16-11-2006<br>16-11-2006 |
| DE 102007019366 A1 | 30-10-2008 | CN 101334313 A<br>DE 102007019366 A1<br>EP 1985979 A2<br>KR 20080095212 A<br>US 2008258522 A1 | 31-12-2008<br>30-10-2008<br>29-10-2008<br>28-10-2008<br>23-10-2008 |
| DE 102005053264 A1 | 10-05-2007 | DE 102005053264 A1<br>SE 0601944 A | 10-05-2007<br>09-05-2007 |
| DE 102007014894 A1 | 02-10-2008 | DE 102007014894 A1<br>EP 2130008 A1<br>RU 2009139290 A<br>WO 2008116696 A1 | 02-10-2008<br>09-12-2009<br>10-05-2011<br>02-10-2008 |
| GB 2438219 A | 21-11-2007 | EP 2023817 A1<br>GB 2438219 A<br>TW 200803793 A<br>US 2009100933 A1<br>WO 2007132187 A1 | 18-02-2009<br>21-11-2007<br>16-01-2008<br>23-04-2009<br>22-11-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 200244EC A

**In der Beschreibung aufgeführte Nicht-Patentliteratur**

- ISO 2631-1, Mechanical vibration and schock - Evaluation of human exposure to whole-body vibration, Part 1: General requirements. International Organization for Standardization, 01. Mai 1997